# EUROPEAN PATENT APPLICATION

(11) **EP 0 875 190 A1**
(43) Date of publication of application: **04.11.1998**
(21) Application number: 97830205.7
(22) Date of filing: 30.04.1997
(51) Int. Cl.: A47J 31/00, A47J 43/10

(54) **Froth making device for milk-based beverages**

(71) Applicant: FRABOSK CASALINGHI S.p.A., 25067 Lumezzane S.A. (Brescia) (IT)
(72) Inventor: Ghidini, Tiziano, 25067 Lumezzane S.A. (Brescia) (IT)
(74) Representative: Righetti, Giuseppe

(57) **Abstract**

A froth making device for milk-based beverages, in particular cappuccino and the like, is provided which comprises a support and guide element (2), a piston-shaped emulsifying element (6), and an actuating rod (4) having a longitudinal extension adapted to dispose the piston element (6) to an end position substantially external to the support and guide element. Also provided is a froth making method for milk-based beverages, in particular cappuccino and the like, consisting in laying a supporting portion (9) of the device on the rim of a vessel directly used for taking the beverage to the consumer's mouth and operating a beating unit (3).

## Description

The present invention relates to a froth making device for milk-based beverages, in particular "cappuccino" and the like, comprising a support and guide element of substantially tubular conformation to be employed in cooperation with a vessel directly used for taking one of said beverages to the consumer's mouth and a beating unit having an actuating rod slidably engaged in said support and guide element and emerging from the latter at least at one grip end thereof and at least one substantially piston-shaped emulsifying element associated with a second end of the rod.

As known, for obtaining a milk-based beverage of the "cappuccino" type or the like in which the function of emulsifying milk is required, machines and devices of different kinds involving the use of a steam jet are used or, more simply, devices and machines providing incorporation of air into the liquid so as to form the typical froth by means of beating units generally having one or more piston-shaped emulsifying elements associated with an actuating rod and passed through by passageways for the liquid.

Known devices of the second type, in turn, may be divided into a first class devices in which an expressly dedicated holding body is provided which can be closed by a lid performing a support and guide function for the beating unit, and a second class devices in which the device is associated with a cup, a glass or any other vessel employed for directly taking a beverage such as cappuccino and the like to the consumer's mouth. The last-mentioned class of known devices comprises a substantially tubular support and guide element inside which an actuating rod is slidably engaged, said rod emerging from the device itself at a first grip end, generally provided with an operating knob. Associated with a second end of the rod is at least one said piston-shaped element which can carry out a reciprocating motion together with the rod, internally of said support and guide element. Said last-mentioned element has diametrical sizes adapted for insertion in said vessel so that it can be directly used for introduction into the beverage in order to bear on the vessel bottom during the device actuation.

Practically, the piston-shaped element is forced to stay within the support and guide element even when it reaches its outermost end-of-stroke position in which it is substantially flush with the edge of the support and guide element resting on said vessel bottom.

Known devices to be directly employed in cooperation with a vessel of the cited type have some limits and drawbacks.

Actually, first of all they do not enable an immediate and easy access to the interior of the tubular support and guide element for cleansing operations because the piston-shaped element or elements obstruct the tubular-element opening. For overcoming the above drawback, said tubular element is generally made of two detachable parts.

Alternatively, the beating unit may be completely pulled out of the support and guide element by unscrewing of the grip knob usually provided on the actuating rod.

In any case, dismantling steps of these devices are needed for cleansing operations.

In addition, these known devices do not always possess an appropriate steadiness when positioned on the cup or glass during the reciprocating motion of the actuating rod and, consequently, their use is sometimes unpractical and not completely efficient in making froth.

Under this situation, the technical task underlying the present invention is to provide a froth making device and method for milk-based beverages, in particular cappuccino and the like, capable of substantially eliminating the above drawbacks.

Within the scope of this technical task it is an important aim of the invention to provide a froth making device and method for milk-based beverages enabling an easy and ready cleaning both manually and in a dishwasher, without any dismantling or disassembling operation being required.

Another important aim of the invention is to provided a device and method promoting execution of correct and particularly efficient manual operations for making froth of excellent quality and stiffness.

The technical task mentioned and the aims specified are substantially achieved by a froth making device in milk-based beverages which is characterized in that said actuating rod has a longitudinal extension greater than the extension along a longitudinal axis of said support and guide element, so that said piston-shaped element is available at a substantially external end position, separated from said support and guide element.

The technical task mentioned and the aims specified are also substantially achieved by a froth making method for milk-based beverages, in particular cappuccino and the like, involving the use of a device equipped with a support and guide element and a beating unit to be employed in cooperation with a vessel directly used to take one of said beverages to the consumer's mouth and operable with a reciprocating motion in said vessel, which method is characterized in that it comprises, before the step of operating the beating unit, the step of laying a supporting portion on the rim of said vessel, which portion is associated with said support and guide element and defines a lid adapted to match with vessel rims of different sizes, said beating unit being actuated while keeping said supporting portion resting on said vessel rim.

Description of two preferred embodiments of a froth making device in accordance with the invention is now given hereinafter by way of non-limiting example, with reference to the accompanying drawings, in which:
- fig. 1 is a perspective view of one embodiment of the device in accordance with the invention;
- Fig. 2 is a longitudinal sectional view of the device in Fig. 1;
- Fig. 3 is a longitudinal sectional view of a second embodiment of the device; and
- fig. 4 is a bottom view of a piston-shaped emulsifying element.

With reference to the drawings, the froth making device for milk-based beverages in accordance with the invention has been generally identified by reference numeral 1.

It comprises a support and guide element 2 of substantially tubular conformation and defined by a unitary piece, preferably of plastic material.

The support and guide element 2 more generally is adapted for use in cooperation with a cup, a glass or, more particularly, a vessel directly used for taking one of said beverages to the consumer's mouth.

Slidably engaged in the support and guide element 2 is a beating unit 3, in turn comprising an actuating rod 4 having a first grip end 4a projecting from the support and guide element 2 and provided with an operating and grip knob 5, and at least one substantially piston-shaped emulsifying element 6 which is integral with a second end 4b of rod 4.

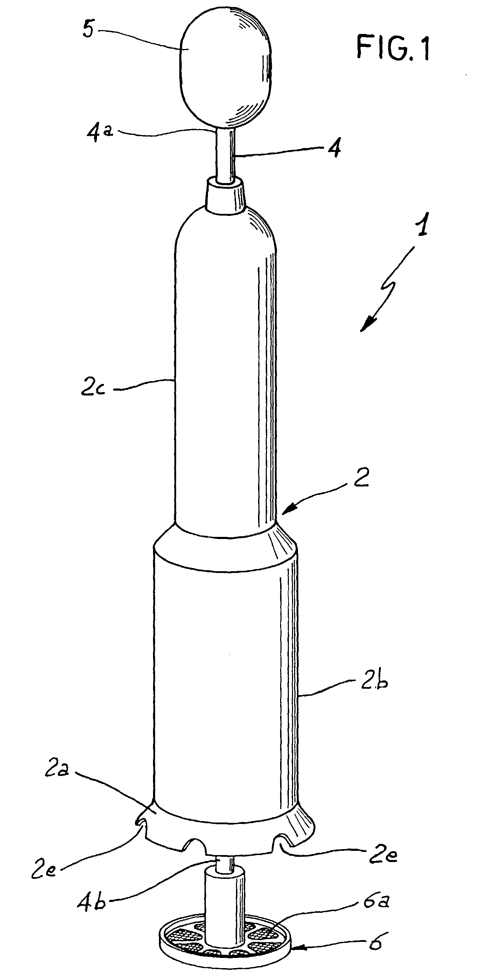

In an original manner, the actuating rod 4 has a longitudinal extension greater than the extension of the support and guide element 2 along a longitudinal axis 7, so that the piston-shaped element 6 is available at a position of maximum projection or end position, shown in Fig. 1, to be used during washing operations carried out manually or in a dishwasher, which position is substantially external and separated from said support and guide element 2.

Practically, between an end skirt 2a of said support and guide element 2 and the piston-shaped element 6 in said end position a wide passage is formed which is capable of enabling an appropriate flow of washing liquid within the support and guide element 2 as well as perfect cleaning of both faces of the piston element 6 itself. Since said piston element 6 has through holes 6a formed of nets for example, that in operation efficiently help in incorporating air into the liquid so as to make it foam, difficulties usually present for eliminating deposits and debris tending to build up in the interstices of said holes are thus completely overcome.

In order to be sure that the piston element is held in said end position, for example in case of washing in a dishwasher when the support and guide element 2 is usually disposed in a horizontal position, appropriate locking means 8 is provided which is interposed between the actuating rod 4 and the support and guide element 2 and is capable of fixedly stopping movement of said rod.

For example, the locking means 8 preferably comprises a first cone-shaped stop portion 8a integral with the support and guide element 2 and a second stop portion 8b the shape of which substantially matches that of the first stop portion and which is integral with knob 5 close to the first grip end 4a.

The above mentioned stop portions can be mutually matched by fitting only in said maximum-projection position of the piston element 6.

Alternatively, the locking means 8 comprises a first and a second screw-threaded area, not shown in the accompanying drawings, disposed on the support and guide element 2 and the first grip end 4a of rod 4 respectively, and adapted to be matched with each other in said end position of the piston element 6.

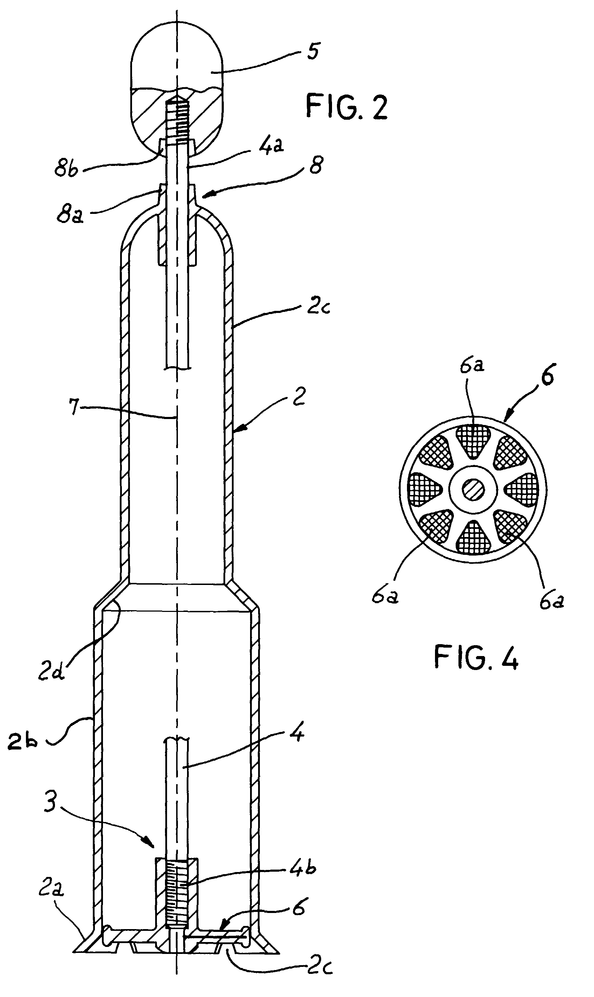

In the firs embodiment of the device shown in Figs. 1 and 2, the support and guide element 2 in its operating position is to be laid on the bottom of said vessel, its end skirt 2a contacting said bottom. For the purpose, the support and guide element 2 must have a diametrical size suitable for enabling introduction of same into the cup or glass intended for use.

More particularly, the support and guide element 2 is comprised of a first portion 2b of an inner diameter substantially corresponding to the outer diameter of the piston element 6 and a second grasping portion 2c of lower diameter than the first portion. The first portion 2b, in the first embodiment of the device, must therefore have an outer diameter smaller than that of the vessel intended for insertion. Interposed between the first portion 2b and second portion 2c is a beating area 2d confining the piston element stroke inwardly of the support and guide element 2.

Advantageously, the end skirt 2a, in addition to being provided with a plurality of peripheral openings 2e adapted to enable the beverage passage between the interior and exterior of the support and guide element 2, also extends following an outwardly-enlarged substantially cone-shaped configuration so as to increase the resting steadiness of the device on the bottom of the vessel into which it is introduced.

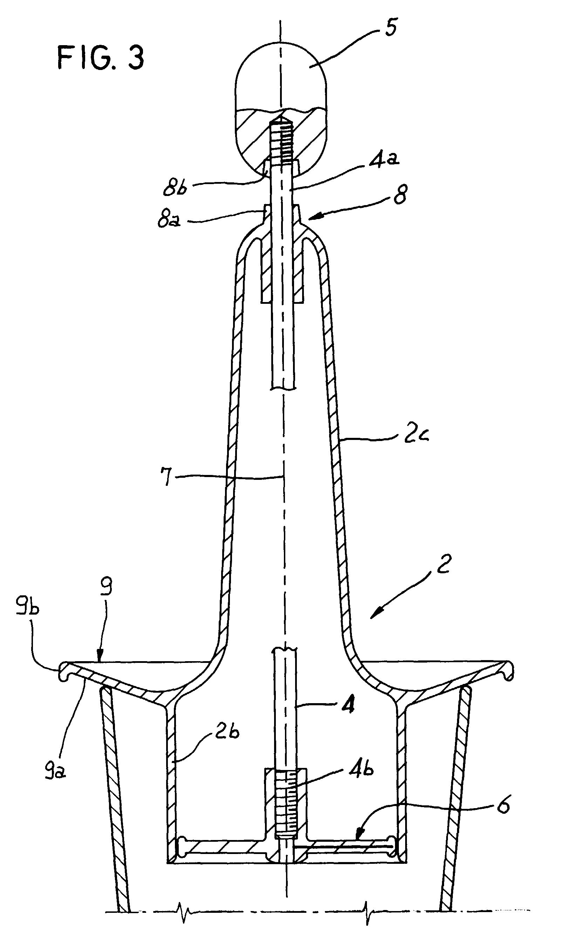

In a second embodiment, shown in Fig. 3, in an original manner the support and guide element 2 comprises a supporting portion 9 to be laid in its operating position on the rim of said vessel. The supporting portion 9 substantially extends in a direction transverse to the longitudinal axis 7 so as to practically define a lid adapted to match with vessels having diametrical sizes even greatly differentiated from each other.

In addition, the supporting portion 9 comprises a substantially cone-shaped surface 9a laying on the rim of one said vessel and adapted to self-centre the whole device on the vessel itself.

Advantageously, the cone-shaped surface 9a in the operating condition of the device is slanting upwardly moving away from the longitudinal axis 7, so as to further improve steadiness of the whole device and tightness of same on the vessel rim, by increasing the introduction amount of the support and guide element 2 into the vessel itself.

Preferably, the outer perimeter of the supporting portion 9 is prolonged by a perimetric lip 9b projecting downwardly in an operating position and adapted to delimit displacements of the device, and in any case to ensure a safe abutment of the cone-shaped surface 9a on the rim of a vessel when the latter has a diameter substantially corresponding to the maximum diameter of the cone-shaped surface 9a.

Finally, the supporting surface 9 can be disposed either at the end of the support and guide element 2 or, advantageously, at an intermediate position, as shown in fig. 3, so as to divide the support and guide element 2 into a first portion 2b insertable, in operating position, in a given vessel, and a second portion 2c projecting, still in operating position, from the vessel itself. In this way, the reciprocating motion of the piston element 6 takes place, at least partly, within the first portion 2b, thereby enabling the liquid subjected to emulsification to be partly retained in a confined area, which will improve quality of the froth being progressively produced.

The invention puts into practice a new method being an integral part of the present invention as well.

For application of this method a device equipped with a support element and a beating unit to be employed in cooperation with a vessel holding a beverage that will be then directly taken to the consumer's mouth, i.e. a cup or a glass for example, is provided for use.

Associated with the support and guide element is a supporting portion defining a lid adapted to rest on rims of vessels having different sizes.

According to the method, said supporting portion is laid on the rim of a vessel and reciprocating motion of the beating unit takes place while keeping the supporting portion in abutment on the vessel rim.

As a matter of fact, first of all, both embodiments of the device can be quickly and easily made ready for washing without carrying out any dismantling operation, by merely positioning the piston element to the end of its stroke, since the latter will be surely maintained in this position even in the presence of strong jets of washing liquid, thereby ensuring important passages of washing liquid to the inside of the support and glide element body.

In addition, above all in the second embodiment in which the device rests on the rim of a vessel and closes it like a lid, not only a strong positioning steadiness is established thereby facilitating operation of the beating unit and increasing efficiency of the emulsifying process, but also any possible partial escape of the beverage from the vessel during operation of the device is prevented.

## Claims

1. A froth making device for milk-based beverages, in particular cappuccino and the like, comprising:
- a support and guide element (2) of substantially tubular conformation to be employed in cooperation with a vessel directly used for taking one of said beverages to the consumer's mouth, and
- a beating unit (3) having an actuating rod (4) slidably engaged in said support and guide element (2) and emerging from the latter at least at one grip end (4a) thereof, and at least one substantially piston-shaped emulsifying element (6) associated with a second end (4b) of the rod,
characterized in that said actuating rod (4) has a longitudinal extension greater than the extension along a longitudinal axis of said support and guide element (2), so that said piston-shaped element (6) is available at a substantially external end position, separated from said support and guide element (2).

2. A device according to claim 1, characterized in that interposed between said actuating rod (4) and support and guide element (2) is locking means (8) adapted to fixedly stop said actuating rod (4) at said end position of the piston element (6).

3. A device according to claim 2, characterized in that said locking means (8) comprises a first cone-shaped stop portion (8a) integral with said support and guide element (2) and a second stop portion (8b) the shape of which matches that of the first portion and which is integral with said first grip end (4a) of said actuating rod (4), said stop portions being adapted for matching with each other by fitting, in said end position of the piston element.

4. A device according to claim 2, characterized in that said locking means (8) comprises a first screw-threaded area disposed on said support and guide element and a second screw-threaded area disposed on said first grip end of said actuating rod (4) and adapted for engagement with said first screw-threaded area in said end position of the piston element.

5. A device according to claim 1, characterized in that said support and guide element (2) comprises an end skirt (2a) adapted to rest, in operating position, on the bottom of said vessel and having a plurality of peripheral through openings (2e)adapted to enable passage of said beverage between the interior and exterior of said support and guide element.

6. A device according to claim 5, characterized in that said end skirt (2a) extends in a substantially cone-shaped conformation widening outwardly relative to said support and guide element (2).

7. A device according to claim 1, characterized in that said support and guide element (2) comprises a supporting portion (9), adapted to rest, in operating position, on the rim of said vessel and substantially extending transversely of the longitudinal axis of said support and guide element (2), so as to define a lid suitable for matching with vessels of different sizes.

8. A device according to claim 7, characterized in that said supporting portion (9) comprises a substantially cone-shaped surface (9a) laying on the rim of a vessel and adapted to self-centre said support and guide element (2) on the vessel itself.

9. A device according to claim 8, characterized in that said substantially cone-shaped surface (9a) of said supporting portion (9) is slanting upwardly in operating position, moving away from the longitudinal axis of said support and guide element.

10. A device according to claim 7, characterized in that said supporting portion (9) peripherally has a perimetric lip (9b) projecting downwardly in said operating position.

11. A device according to claim 7, characterized in that said supporting portion (9) is disposed on said support and guide element (2) in an intermediate position, so as to divide the support and guide element itself into a first portion insertable, in operating position, in said vessel, and into a second grip portion projecting, in operating position, from the vessel itself.

12. A device according to claim 1, characterized in that said support and guide element (2) is defined by a unitary piece.

13. A device according to claim 1, characterized in that said support and guide element (2) comprises a first portion of a diameter substantially corresponding to the outer diameter of said piston element (6) and a second grip portion of a lower diameter than said first portion, an abutment area delimiting the stroke of said piston element (6) inwardly of the support and guide element being interposed between said two portions.

14. A froth making method for milk-based beverages, in particular cappuccino and the like, involving the use of a device equipped with a support and guide element (2) and a beating unit (3) to be employed in cooperation with a vessel directly used to take one of said beverages to the consumer's mouth and operable with a reciprocating motion in said vessel, characterized in that it comprises, before the operating step of the beating unit, the step of laying a supporting portion (9) associated with said support and guide element (2) on the rim of said vessel, said portion defining a lid adapted to match with vessel rims of different sizes, said beating unit being actuated while keeping said supporting portion resting on said vessel rim.
